# EUROPÄISCHE PATENTANMELDUNG

(11) **EP 1 628 065 A2**
(43) Veröffentlichungstag der Anmeldung: **22.02.2006**
(21) Anmeldenummer: 05013511.0
(22) Anmeldetag: 22.06.2005
(51) Int. Cl.: F16L 37/00

(54) **Kupplungseinrichtung mit magnetischer Verriegelung**

(30) Priorität: 17.08.2004 DE 102004039857
(71) Anmelder: VERITAS AG, 63571 Gelnhausen (DE)
(72) Erfinder: Naumann, Voler, Dr., 63619 Bad Orb (DE); Rösch, Thomas, 63589 Linsengericht-Grossenhausen (DE)
(74) Vertreter: Grünecker, Kinkeldey, Stockmair & Schwanhäusser Anwaltssozietät

(57) **Zusammenfassung**

Die Erfindung betrifft eine Kupplungseinrichtung für Rohre oder dergleichen mit einem Kupplungsgehäuse mit einer Öffnung zur Aufnahme eines Rohres und einer Verriegelungseinrichtung, die überführbar ist zwischen:
- einer Lösestellung, in der das Rohr gegenüber dem Kupplungsgehäuse bewegbar ist und
- einer Verriegelungsstellung, in der das Rohr im Kupplungsgehäuse gegenüber Herausziehen sicherbar ist,

Um die bekannten Verriegelungssysteme für Kupplungseinrichtungen im Crash- bzw. Brandfalle zu verbessern, stellt die Erfindung eine Kupplungseinrichtung der eingangs genannten Art bereit, bei der die Verriegelungseinrichtung zum Überführen zwischen Löse- und Verriegelungsstellung und/oder zwischen Verriegelungs- und Lösestellung magnetisch betätigbar ist.

## Beschreibung

Die Erfindung betrifft eine Kupplungseinrichtung für Rohre oder dergleichen mit einem Kupplungsgehäuse mit einer Öffnung zur Aufnahme eines Rohres und einer Verriegelungseinrichtung, die überführbar ist zwischen:
- einer Lösestellung, in der das Rohr gegenüber dem Kupplungsgehäuse bewegbar ist und
- einer Verriegelungsstellung, in der das Rohr im Kupplungsgehäuse gegenüber Herausziehen sicherbar ist.

Eine derartige Kupplungseinrichtung ist beispielsweise aus der EP 1 154 190 A2 bekannt. Sie zeigt eine Steckkupplung für Rohre mit einer zweifachen mechanischen Verriegelungseinrichtung.

Derartige Rohrkupplungen werden bevorzugt im Automobilbereich, im Bereich der Kraftstoffzuleitung zum Motor eingesetzt. Sie sind auch bekannt als Quick Connectoren und zeichnen sich dadurch aus, dass Kraftstoffleitungselemente mit geringem Montageaufwand verbunden werden können. Ein großes Sicherheitsproblem bei derartigen Kupplungseinrichtungen ergibt sich jedoch, wenn die Kraftstoffleitungselemente z. B. bei Wartungsarbeiten durch die Einwirkung von Stößen oder Schlägen an den Kupplungsstellen getrennt werden. Insbesondere im Crashfall, wo zum Teil extreme mechanische Kräfte auf die Kupplungen einwirken, passiert es, dass sich die Verriegelungseinrichtungen entriegeln und sich die Kraftstoffleitungselemente trennen. Auslaufender Kraftstoff stellt vor allem im Brandfall ein enormes Sicherheitsrisiko dar.

Der vorliegenden Erfindung liegt die Aufgabe zugrunde, die bekannten Verriegelungssysteme für Kupplungseinrichtungen für den Crash- bzw. Brandfall zu verbessern.

Zur Lösung dieser Aufgabe stellt die Erfindung eine Kupplungseinrichtung der eingangs genannten Art bereit, bei der die Verriegelungseinrichtung zur Überführung von der Verriegelungsstellung in die Lösestellung und/oder von der Lösestellung in die Verriegelungsstellung magnetisch betätigbar ist. Des weiteren wird zur Lösung dieser Aufgabe ein Rohr mit einer ebensolchen Verriegelungseinrichtung bereitgestellt, sowie ein Werkzeug, das ein magnetisches Feld erzeugt, um so die Verriegelungseinrichtung der obigen Kupplungseinrichtung oder des obigen Rohrs zum Überführen von der Verriegelungsstellung in die Lösestellung und/oder umgekehrt magnetisch zu betätigen. Nur durch dieses spezielle Werkzeug kann der Verriegelungsmechanismus ver- und/oder entriegelt werden. Die Gefahr, dass sich die Verriegelungseinrichtung durch Einwirkung von mechanischen Kräften unbeabsichtigt entriegelt, wird dadurch gebannt. Ein unbeabsichtigtes Überführen von der Verriegelungsstellung in die Lösestellung ist nicht möglich.

Es erweist sich als hilfreich, wenn die Verriegelungseinrichtung eine magnetisch bewegbare Einrichtung umfasst. Durch die Einwirkung des Magnetfelds kann zum Beispiel ein metallisches Element derart bewegt werden, dass die Verriegelungseinrichtung von der Verriegelungsstellung in die Lösestellung überführt wird. Eine Vielzahl von möglichen Verriegelungskonzepten kann dabei realisiert werden. Denkbar sind beispielsweise Verriegelungskonzepte, bei denen ein federunterstütztes metallisches Sperrelement an einem Merkmal (z.B. Ringwulst, Ringnut) des in das Kupplungsgehäuse eingeführten Rohres angreift und so das Rohr gegen Herausziehen sichert, und das Sperrelement durch die Einwirkung des Magnetfelds entgegen der Federkraft vom Eingriff mit dem Merkmal des Rohres gelöst wird, um die Bewegung des Rohres entgegen der Einschubrichtung zuzulassen.

Es erweist sich als hilfreich, wenn die Verriegelungseinrichtung eine magnetisch verformbare Einrichtung umfasst. Durch ein entsprechendes Magnetfeld, könnte sich somit ein Bauteil verformen lassen und das Kupplungsgehäuse und den Rohrstutzen derart verbinden, dass die Verbindung nur noch durch gezielte Rückumformung oder gar nicht mehr zerstörungsfrei lösbar ist. Eine gezielte Rückumformung ließe sich beispielsweise durch Umpolung des Magnetfeldes, welches die gezielte Verformung herbeigeführt hat, bewerkstelligen. Auch hierbei sind beispielsweise Verriegelungskonzepte denkbar, bei denen z.B. ein metallisches Federelement an einem Merkmal (z.B. Ringwulst, Ringnut) des in das Kupplungsgehäuse eingeführten Rohres angreift und so das Rohr gegen Herausziehen sichert, und das Federelement selbst durch die Einwirkung des Magnetfelds verformt und vom Eingriff mit dem Merkmal des Rohres gelöst wird, um die Bewegung des Rohres entgegen der Einschubrichtung zuzulassen.

Es erweist sich als günstig, wenn die Verriegelungseinrichtung eine magnetisch verdrehbare Einrichtung umfasst. Einfache aber effektive Verriegelungskonzepte zur axialen Sicherung des Rohrstutzens im Kupplungsgehäuse, z.B. Bajonettverschluss, ließen sich dadurch verwirklichen.

Auch erweist es sich als günstig, wenn die Verriegelungseinrichtung bereits eine magnetische Einrichtung aufweist. Diese kann gezielt von dem durch das zugehörige Werkzeug erzeugten Magnetfeld beeinflusst werden.

Es ist vorteilhaft, wenn sich die Verriegelungseinrichtung im Verriegelungszustand befindet, wenn kein Magnetfeld auf sie wirkt. So ist Verriegelungseinrichtung normalerweise geschlossen und ohne spezielles Werkzeug nicht lösbar.

Auch ist es vorteilhaft, wenn sich die Verriegelungseinrichtung im Lösezustand befindet, wenn ein Magnetfeld auf sie wirkt. Der Zustand der Verriegelungseinrichtung ist damit direkt abhängig von Vorhandensein des Magnetfeldes.

In einer bevorzugten Ausführungsform ist die Verriegelungseinrichtung von der Verriegelungsstellung in die Lösestellung und/oder umgekehrt berührungsfrei überführbar. Beschädigungen der Kupplungseinrichtungen durch den unmittelbaren Kontakt mit Werkzeug (z.B. Schraubenschlüssel, Zangen, etc.) können dadurch vermieden werden.

In einer vorteilhaften Ausführung weist die Verriegelungseinrichtung zumindest einen Verriegelungsmechanismus auf, der die Bewegung des Rohrs in einer ersten Richtung zulässt und in einer zweiten, entgegengesetzten Richtung hemmt. So kann die Kupplungsverbindung in gewohnter Weise schnell und ohne großen Montageaufwand bzw. ohne Spezialwerkzeug hergestellt werden, jedoch ist die unbeabsichtigte Entriegelung der Kupplungsverbindung nicht möglich.

Alternativ erweist es sich als günstig, wenn die Verriegelungseinrichtung unmittelbar am Rohr angebracht ist. Da die Verriegelungseinrichtung dabei in gleicher Weise mit Kupplungsgehäuse und Rohr zusammenwirkt, gelten analog die obigen Überlegungen zu den vorteilhaften Ausführungen.

Des Weiteren stellt die Erfindung ein Werkzeug bereit, welches ein magnetisches Feld erzeugt, um die jeweiligen Verriegelungseinrichtung zum Überführen von der Verriegelungsstellung in die Lösungsstellung und/oder von der Lösungsstellung in die Verriegelungsstellung magnetisch zu betätigen.

Ferner stellt die Erfindung Kupplungen zwischen einem Kupplungsgehäuse und einem Rohr bereit, wobei die Verriegelungseinrichtung wahlweise auf der Seite des Kupplungsgehäuses oder auf der Seite des Rohres angeordnet sein kann.

Zuletzt stellt die Erfindung einen Bausatz bestehend aus einer ebensolchen Kupplung und dem dazugehörigen Werkzeug bereit.

### KURZE BESCHREIBUNG DER ZEICHNUNGEN:

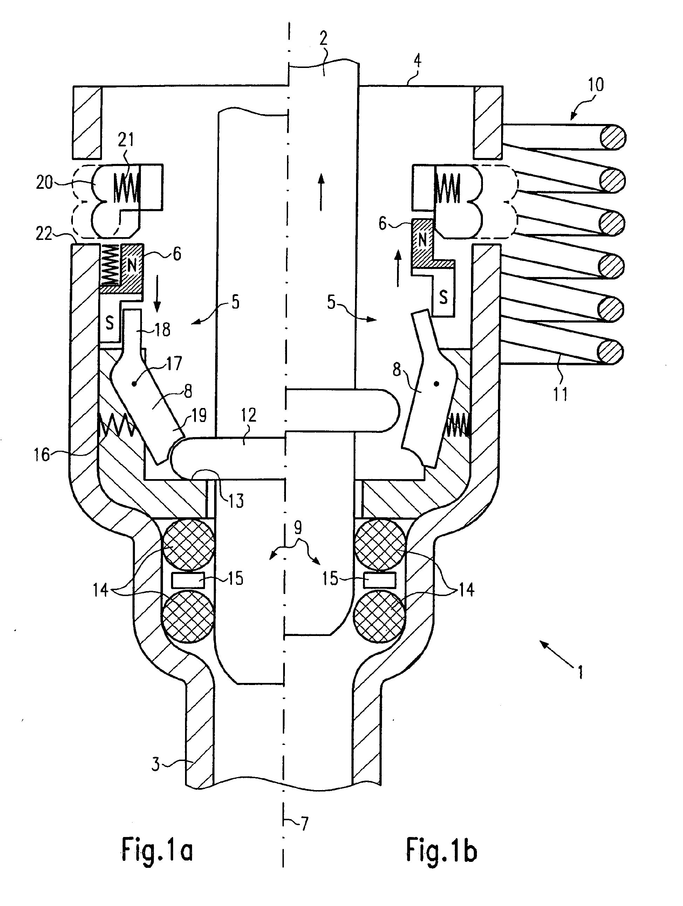

- Fig. 1 a: ist eine Darstellung einer ersten Ausführungsform der erfindungsgemäßen Kupplungseinrichtung mit angeschlossenem Rohrstutzen in der Verriegelungsstellung, wobei die kupplungsgehäuseseitige Verriegelungseinrichtung eine magnetisch bewegbare Einrichtung aufweist.
- Fig. 1 b: ist eine Darstellung eines ersten Ausführungsbeispiels der erfindungsgemäßen Kupplungseinrichtung mit außen anliegendem Werkzeug in der Lösestellung, wobei die kupplungsgehäuseseitige Verriegelungseinrichtung eine magnetisch bewegbare Einrichtung aufweist.
- Fig. 2a: ist eine Darstellung einer zweiten Ausführungsform der erfindungsgemäßen Kupplungseinrichtung mit angeschlossenem Rohrstutzen in der Verriegelungsstellung, wobei die kupplungsgehäuseseitige Verriegelungseinrichtung eine magnetisch verformbare Einrichtung aufweist.
- Fig. 2b: ist eine Darstellung eines zweiten Ausführungsbeispiels der erfindungsgemäßen Kupplungseinrichtung mit außen anliegendem Werkzeug in der Lösestellung, wobei die kupplungsgehäuseseitige Verriegelungseinrichtung eine magnetisch verformbare Einrichtung aufweist.
- Fig. 3a: ist eine Darstellung einer dritten Ausführungsform der erfindungsgemäßen Kupplungseinrichtung mit angeschlossenem Rohrstutzen in der Verriegelungsstellung, wobei die rohrseitige Verriegelungseinrichtung eine magnetisch verformbare Einrichtung aufweist.
- Fig. 3b: ist eine Darstellung eines dritten Ausführungsbeispiels der erfindungsgemäßen Kupplungseinrichtung mit außen anliegendem Werkzeug in der Lö- sestellung, wobei die rohrseitige Verriegelungseinrichtung eine magnetisch verformbare Einrichtung aufweist.

### BESCHREIBUNG DER BEVORZUGTEN AUSFÜHRUNGSBEISPIELE:

Dieser Erfindung liegt der Gedanke zugrunde, eine nicht-mechanische Sicherung bzw. Verriegelungseinrichtung zum Sichern eines Rohrstutzens in einem Kupplungsgehäuse gegen Herausziehen bereitzustellen, wobei die Verriegelungseinrichtung magnetisch betätigbar ist. So wird eine unbeabsichtigte mechanische Entriegelung z.B. durch Stoß oder Schlag vermieden.

Dieser erfinderische Gedanke umfasst und schützt eine Vielzahl verschiedener Ausführungsformen von Verriegelungseinrichtungen, die wahlweise auf der Seite des Kupplungsgehäuses und/oder der Seite des Rohrstutzens vorgesehen sein können, und zum Sichern des Rohrstutzens im Kupplungsgehäuse gegen Herausziehen wahlweise magnetisch verformbare oder magnetisch bewegbare Komponenten aufweisen können. Mit diesen Anweisungen hat der Fachmann bereits eine Vielzahl von Ausführungsformen von Verriegelungskonzepten vor Augen, die er ohne Weiteres in die Tat umsetzen kann.

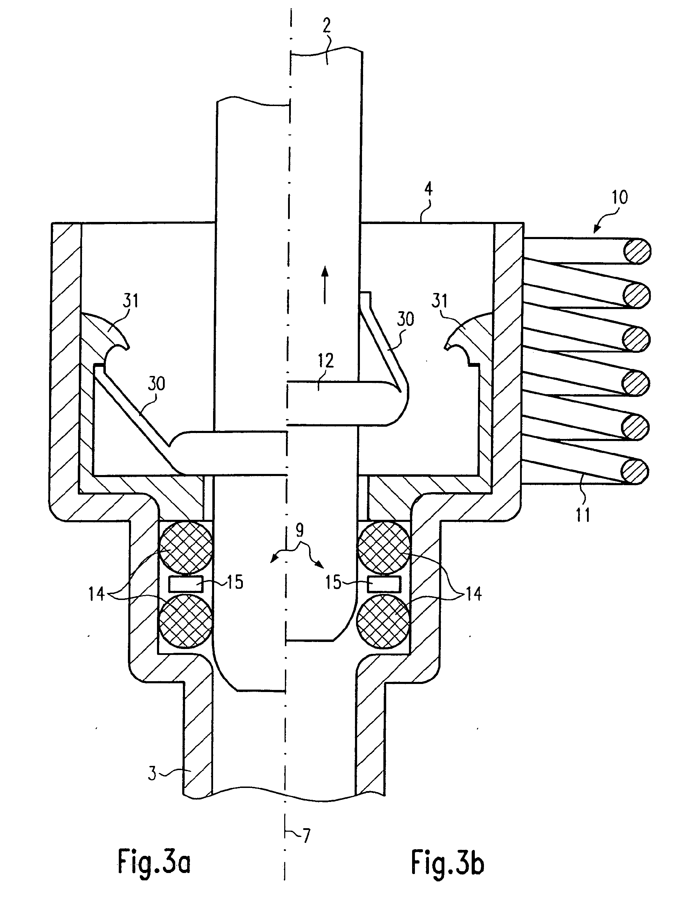

Stellvertretend für die unbegrenzte Vielzahl denkbarer Ausführungsformen von Verriegelungskonzepten werden mit Bezug auf die Zeichnungen 1 a, 1 b sowie 2a und 2b zwei kupplungsgehäuseseitige Verriegelungseinrichtungen beschrieben, wobei das erste Ausführungsbeispiel eine magnetisch bewegbare Komponente, und das zweite Ausführungsbeispiel eine magnetisch verformbare Komponente aufweist. In Fig. 3a und 3b ist eine Ausführungsform einer rohrseitigen Verriegelungseinrichtung angedacht.

Alle Ausführungsbeispiele haben gemeinsam, dass die dargestellten Verriegelungseinrichtungen mit Hilfe eines ein magnetisches Feld erzeugenden Werkzeugs zur Überführung zwischen Verriegelungsstellung und Lösestellung und/oder umgekehrt magnetisch betätigbar sind. In den Zeichnungen ist das Werkzeug symbolisch durch eine angedeutete Magnetspule dargestellt. Bei der Realisierung eines idealen Werkzeugs ist der kundige Fachmann ebenso wenig auf spezielle Ausführungsformen festegelegt und bedarf keiner weiteren Anweisung, um das Werkzeug dem jeweiligen Einsatzzweck anzupassen.

Die von der Mittelachse 7 linke Hälfte der Zeichnungen zeigt jeweils den Verriegelungszustand und die rechte Hälfte den Lösezustand. In sämtlichen Darstellungen fallen die Mittelachsen 7 des Kupplungsgehäuses 3 und des Rohrstutzens 2 zusammen.

Im ersten Ausführungsbeispiel in Fig. 1 a und 1 b ist die Verriegelungseinrichtung 5 auf der Seite des Kupplungsgehäuses 3 angeordnet und umfasst eine magnetisch bewegbare Komponente in Gestalt des Dauermagneten 6. Zunächst wird der Verriegelungszustand der Kupplungseinrichtung 1 beschrieben. Der Verriegelungszustand ist der Zustand, in dem sich die Kupplungseinrichtung 1 befindet, wenn keine elektromagnetisches Feld auf sie einwirkt.

Fig. 1 a zeigt eine erfindungsgemäße Kupplungseinrichtung 1 mit angeschlossenem Rohrstutzen 2 im Verriegelungszustand. Die Kupplungseinrichtung 1 weist ein um die Mittelachse 7 im Wesentlichen rotationssymmetrisches Kupplungsgehäuse 3 auf. Auf einer Seite - fortan Aufnahmeseite - weist das Kupplungsgehäuse 3 die Aufnahmeöffnung 4 auf, über die der Rohrstutzen 2 in das Gehäuseinnere eingeführt wird. Zu dem von der Aufnahmeseite entgegengesetzten Ende hin verjüngt sich das Kupplungsgehäuse 3 stufenförmig.

Der Rohrstutzen 2 weist an dem im Kupplungsgehäuse 3 befindlichen Endabschnitt eine Ringwulst 12 auf, die sich im Verriegelungszustand der Verriegelungseinrichtung 5 an einer Anlagefläche 13 an einem umlaufenden Steg in Inneren des Kupplungsgehäuses 3 abstützt und an der in axialer Richtung entgegengesetzten Seite von der Rastklinke 8 festgeklemmt wird. Der Anschlag 13 des Kupplungsgehäuses 3 ist als in etwa ringförmige Fläche ausgebildet, die sich in einer Ebene senkrecht zur Kupplungsgehäuseachse 7 erstreckt.

Eine auf der anderen Seite des Stegs gelegene Dichteinrichtung 9, bestehend aus zwei von einer Distanzhülse 15 beabstandeten Dichtringen 14, dichtet den Endabschnitt des Rohrstutzen 2 gegenüber dem Kupplungsgehäuse 3 ab.

Im ersten Ausführungsbeispiel besteht die Verriegelungseinrichtung 5 im Wesentlichen aus einem Dauermagneten 6, einer Rastklinke 8 und einem Betätigungselement 20.

Der Dauermagnet 6 ist ein Segment eines stufenförmig, zylindrischen Körpers, dessen größerer zylindersegmentartiger Abschnitt im Verriegelungszustand an der (zylindrischen) Innenwand des Kupplungsgehäuses 3 gleitfähig anliegt. Der kleinere zylindersegmentartige Abschnitt des Dauermagneten 6 zeigt zur Aufnahmeöffnung 4 des Kupplungsgehäuses 3. Über eine Feder wird der Dauermagnet 6 in einer Richtung, die im Wesentlichen der Einschubrichtung entspricht, vorgespannt. Der Nordpol des Dauermagneten 6 ist der Aufnahmeöffnung 4 des Kupplungsgehäuses 3 zugewandt und belegt in etwa den kleineren zylindersegmentartigen Abschnitt. Der Südpol des Dauermagneten 6 befindet sich demnach am entegegengesetzten axialen Ende des zylindrischen Körpers und belegt den größeren zylindersegmentartigen Abschnitt.

Die Rastklinke 8 ist am Kupplungsgehäuse 3 befestigt und um eine Achse 17, die sich in den Ansichten der Fig. 1 a und 1 b senkrecht zur Schnittebene erstreckt, drehbar gelagert. Die Rastklinke 8 ist ein in etwa hakenförmiges Bauteil mit zwei Enden 18 und 19, deren Drehachse 17 sich in etwa mittig in der Position des Knicks befindet. Das der Aufnahmeöffnung 4 zugewandte Ende 18 der Rastklinke 8 ist mit dem Dauermagneten 6 in Eingriff und liegt in radialer Richtung gesehen von innen am größeren zylindersegmentartigen Abschnitt des Dauermagneten 6 an. Das dazu entgegengesetzte Ende 19 der Rastklinke 8 befindet sich im Verriegelungszustand mit der Ringwulst 12 des Rohrstutzens 2 im Eingriff. Das Ende 19 der Rastklinke 8 wird durch die Federkraft des Federelements 16 mit der Ringwulst 12 des Rohrstutzens 2 in Eingriff gehalten und hemmt die Bewegung des Rohrstutzens 2 entgegen der Einschubrichtung. Dadurch wird ein selbsthemmendes Verriegelungskonzept verwirklicht.

Ein Betätigungselement bzw. eine Taste 20, die vorgespannt durch eine Feder 21 aus einer Gehäuseöffnung 22 an der Umfangsfläche des Kupplungsgehäuses 3 hervorsteht, kann in radialer Richtung ins Gehäuseinnere gedrückt werden. Die Taste 20 dient dazu, die Rastklinke 8 von der Ringwulst 12 des Rohrstutzens 2 zu lösen, um so die Bewegung des Rohrstutzens 2 entgegen der Einschubrichtung freizugeben. Ohne das Einwirken des elektromagnetischen Feldes ist der Kraftfluss von der Taste 20 zur Rastklinke 8 jedoch unterbrochen und eine mechanische Entriegelung des Verriegelungsmechanismus 5 durch Betätigung der Taste 20 ist nicht möglich.

Fig. 1 b zeigt das erste Ausführungsbeispiel im Entriegelungszustand. Ein Werkzeug 10 mit einer ein magnetisches Feld erzeugenden Magnetspule 11 ist um das Kupplungsgehäuse angeordnet. Das vom Werkzeug 10 erzeugte magnetische Feld übt auf den Dauermagneten 6 eine Kraft aus, die den Dauermagneten 6 entgegen der Vorspannung der Feder und entgegen der Einschubrichtung bewegt. Der Kraftfluss von der Taste 20 zur Rastklinke 8 ist dann geschlossen und der Verriegelungsmechanismus 5 kann durch Betätigung der Taste 20 gelöst werden.

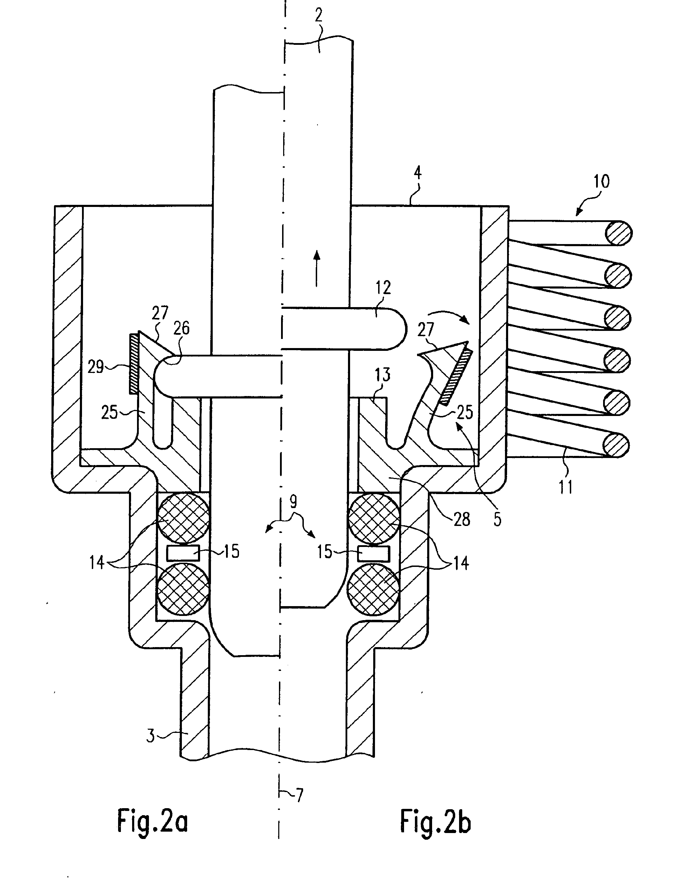

Ein zweites Ausführungsbeispiel wir mit Bezug auf Fig. 2a und 2b beschrieben. Gleiche Bauteile sind, um Redundanzen zu vermeiden, mit gleichen Bezugszeichen versehen wie im ersten Ausführungsbeispiel. Im zweiten Ausführungsbeispiel ist die Verriegelungseinrichtung 5 ebenso auf der Seite des Kupplungsgehäuses 3 angeordnet und umfasst eine magnetisch verformbare Komponente in Gestalt der Federzungen 20.

Fig. 2a zeigt den Verriegelungszustand der Kupplungseinrichtung 1 mit einem Kupplungsgehäuse 3 und einem in die Aufnahmeöffnung 4 des Kupplungsgehäuses 3 eingeführten Rohrstutzen 2. Die Form des Kupplungsgehäuses 3 gleicht im Wesentlichen der des ersten Ausführungsbeispiels.

Die Verriegelungseinrichtung 5 weist mehrere baugleiche Federzungen 25 auf, die um die Mittelachse 7 vorzugsweise gleichmäßig verteilt angeordnet sind und über das Verbindungselement 28 verbunden sind. Stellvertretend für eine Vielzahl wird eine Federzunge 25 beschrieben. Die Federzunge 25 besteht aus flexiblem, biegsamen Material z.B. Kunststoff. Sie steht im Wesentlichen parallel zur Mittelachse 7 des Kunststoffgehäuses 3 von dem Verbindungselement 28 in Richtung der Aufnahmeöffnung 4 hervor. Vorzugsweise sind die Federzungen 25 an dem Verbindungselement 28 einstückig angeformt und bestehen aus gleichem Material. An dem der Aufnahmeöffnung 4 zugewandten Ende der Federzunge 25 befindet sich radial innenseitig ein Eingriffsabschnitt 26, der der Außenkontur der Ringwulst 12 des Rohrstutzens 2 angepasst ist, und die Ringwulst 12 im Verriegelungszustand hintergreift. Dadurch wird der Rohrstutzen 2 im Kupplungsgehäuse 3 gegen Herausziehen gesichert. An dem der Aufnahmeöffnung 4 zugewandten Ende der Federzunge 25 befindet sich radial außenseitig, also gegenüber dem Eingriffsabschnitt 26, ein Metallkörper oder Magnetkörper 28. Dieser Metallkörper oder Magnetkörper 28 ist beispielsweise auf die Außenseite der Federzunge 25 aufgeklebt.

Fig. 2b zeigt das zweite Ausführungsbeispiel der vorliegenden Erfindung im Lösezustand. Außenseitig um das Kupplungsgehäuse 3 ist das ein Magnetfeld erzeugende Werkzeug 10 angeordnet. Das Werkzeug 10 wird durch die Magnetspule 11 symbolisch dargestellt. Durch den Einfluss des auf den Magnetkörper 28 einwirkenden Magnetfeldes werden die Federzungen 25 entgegen ihrer Federkraft magnetisch verformt bzw. aufgespreizt, um dadurch eine von den Eingriffsabschnitten 26 der Federzungen 25 begrenzte Öffnung zu vergrößern, wodurch eine Bewegung des Rohres 2 entgegen der Einschubrichtung zugelassen wird.

Die Fig. 3a und 3b zeigen ein drittes Ausführungsbeispiel der vorliegenden Erfindung. Im dritten Ausführungsbeispiel ist die Verriegelungseinrichtung 5 auf der Seite des Rohrstutzens 2 angeordnet und umfasst eine magnetisch verformbare Komponente in Gestalt der Federabschnitte 20.

Fig. 3a zeigt den Verriegelungszustand des dritten Ausführungsbeispiels. Am Rohrstutzen 2 sind, vorzugsweise um die Mittelachse gleichmäßig verteilt, magnetische Federabschnitte 30 vorgesehen, die sich aufgrund ihrer eigenen Federkraft in radialer Richtung aufspreizen. An dem im Kupplungsgehäuse vorgesehenen Halteelement 31 stützen sich die der Aufnahmeöffnung 4 des Kupplungsgehäuses 3 zugewandten Enden der Federabschnitte 30 entgegen der Einschubrichtung ab und sichern den Rohrstutzen 2 im Kupplungsgehäuse 3 gegen Herausziehen.

Fig. 3b zeigt den Lösezustand des dritten Ausführungsbeispiels. Durch den Einfluss des auf die magnetischen Federabschnitte 30 einwirkenden Magnetfeldes, werden die Federabschnitte 30 entgegen der Federkraft magnetisch verformt, um sich aus dem Verriegelungszustand mit dem Halteelement 31 zu lösen.

Nachstehend werden die bevorzugte Anwendungen der beschriebenen Ausführungsbeispiele mit Bezug auf die Figuren erläutert.

Normalerweise, d.h. ohne Einwirken eines magnetischen Feldes, befindet sich die Verriegelungseinrichtung der Kupplungseinrichtung im Verriegelungszustand, so auch vor dem Zusammenführen von Rohrstutzen 2 und Kupplungsgehäuses 3. Der Vorgang des Zusammenführens von Rohrstutzen 2 und Kupplungsgehäuse 3 wird nachstehend für das erste Ausführungsbeispiel mit Bezug auf Fig. 1 a und 1 b beschrieben.

Von der Aufnahmeseite des Kupplungsgehäuses 3 wird der Rohrstutzen 2 in Einschubrichtung, die koaxial zur Mittelachse 7 verläuft, in das Kupplungsgehäuse 3 eingeschoben. Die Ringwulst 2 gleitet an der Unterseite des zur Gehäusemitte zeigenden Rastklinkenendes 19 entlang und verdrängt die Rastklinke 8 entgegen der Federkraft der Feder 16. Wenn die Ringwulst 12 am Anschlag 13 anliegt, wird Rastklinke 8 durch die Federkraft der Feder 16 zurückgedrängt und ein entsprechend geformter Abschnitt am Ende 19 der Rastklinke 8 liegt an der Ringwulst 12 des Rohrstutzens 2 an. Dadurch ist die Bewegung des Rohrstutzens 2 entgegen der Einschubrichtung gehemmt und der Rohrstutzen 2 ist im Kupplungsgehäuse gegen Herausziehen gesichert.

Zur Überführung der Verriegelungseinrichtung 5 zwischen der Verriegelungsstellung, in der das Rohr 2 im Kupplungsgehäuse 3 gegenüber Herausziehen gesichert ist, und der Lösestellung, in der das Rohr 2 gegenüber dem Kupplungsgehäuse 3 bewegbar ist, wird die Verriegelungseinrichtung 5 immer magnetisch betätigt. Dazu wird ein magnetfelderzeugendes Werkzeug 10, symbolisch dargestellt durch die Magnetspule 11, in die Nähe der Kupplungseinrichtung 1 gebracht, und wirkt mit der Verriegelungseinrichtung 5 in entsprechender Weise zum Überführen der Verriegelungseinrichtung 5 zwischen der Verriegelungsstellung und der Lösestellung zusammen. Durch die Einwirkung des vom Werkzeug 10 erzeugten Magnetfeldes wird eine verformbare oder bewegbare Komponente der Verriegelungseinrichtung 5 derart beeinflusst, dass die Verriegelungseinrichtung 5 zwischen der Verriegelungsstellung und der Lösestellung und/oder umgekehrt überführt wird.

Der durch die Einwirkung des Magnetfeldes herbeigeführte Effekt besteht im ersten Ausführungsbeispiel darin, den Kraftfluss zwischen der Taste 20 und der Rastklinke 8 durch die magnetisch bewegbare Komponente, den Dauermagneten 6, zu schließen, um die Bewegung der Taste 20 auf die Rastklinke 8 zu übertragen. Durch Betätigung von Außen wird die Taste 20 und die Tastenbewegung durch den Dauermagneten 6 auf das der Aufnahmeöffnung 4 des Kupplungsgehäuses 3 zugewandten Ende 18 der Rastklinke 8 übertragen. In Folge der Drehbewegung der Rastklinke 8 löst sich das Ende 19 der Rastklinke entgegen der Federkraft der Feder 16 von der Ringwulst 12 des Rohrstutzens und lässt die Bewegung des Rohrstutzens 2 entgegen der Einschubrichtung (Pfeil) zu.

Auch die anderen Ausführungsbeispiele zeigen ähnliche, selbsthemmende Verriegelungskonzepte, welche die Einführbewegung des Rohrstutzens 2 in Einschubrichtung zulassen und entgegen der Einschubrichtung hemmen. Meist wird ein solches Verriegelungskonzept dadurch bewerkstelligt, dass sich eine Federvorrichtung beim Einführen des Rohrstutzens bedingt durch ein Merkmal (z.B. Ringwulst oder Nut) des Rohrstutzens verformt (z.B. gestaucht oder gedehnt wird) und sich der Rohrstutzen bei Erreichen der Verriegelungsposition (z.B. Anschlagsposition) mit dem jeweiligen Merkmal an der Federvorrichtung entgegen der Einschubrichtung abstützt. Derartige selbsthemmende Verriegelungskonzepte sind prinzipiell bekannt und werden im Rahmen dieser Erfindung lediglich kurz beschrieben.

Im zweiten Ausführungsbeispiel, welches in Fig. 2a und 2b zu sehen ist, wird der Rohrstutzen 2 ebenso von der Aufnahmeseite durch die Aufnahmeöffnung 4 in das Kupplungsgehäuse 3 eingeführt. Die schräge Fläche 27 am Eingriffsabschnitt 26 der Federzunge 25 ist dazu vorgesehen, dass die Ringwulst 12 des gerade in das Kupplungsgehäuse 3 eingeführten Rohrstutzens 2 daran abgleitet und die Federzungen 25 soweit auseinander spreizt, bis die Ringwulst 12 durch die von den Eingriffsabschnitten 26 der Federzungen 25 begrenzte Öffnung hindurchpasst. Nachdem die Ringwulst 12 die von den Eingriffsabschnitten 26 der Federzungen 25 begrenzte Öffnung in Einschubrichtung vollständig durchquert hat, hintergreifen die Federzungen 25 - bedingt durch ihre eigene Federkraft - die Ringwulst 25 und sichern das Rohr 2 im Kupplungsgehäuse 3 gegen Herausziehen.

Bei der Einwirkung eines bestimmten magnetischen Feldes auf den Metallkörper oder Magnetkörper 28 spreizt sich die Federzunge 25 nach außen und gibt die Ringwulst 12 des Rohrstutzens 2 frei. Ein solcher Lösezustand ist in Fig. 2b gezeigt. So kann der Rohrstutzen 2 gegenüber dem Kupplungsgehäuse 3 entgegen der Einschubrichtung bewegt und herausgezogen werden.

Im dritten Ausführungsbeispiel, welches in Fig. 3a und 3b zu sehen ist, gleiten die Federabschnitte 30 beim Einschieben des Rohrstutzens 2 in das Kupplungsgehäuse an den abgeschrägten Flächen der Halteabschnitte 31 ab und werden entgegen ihrer eigenen Federkraft verformt. Nach dem Durchlaufen des kleinsten vom Halteabschnitt 31 begrenzten Querschnitts spreizen sich die Federabschnitte 30 bedingt durch die eigene Federkraft auf und stützen sich an einer vorgesehenen Anlagefläche am Halteabschnitt 31 entgegen der Einschubrichtung ab, um den Rohrstutzen 2 im Kupplungsgehäuse 3 gegen Herausziehen zu sichern.

Zum Überführen der Verriegelungseinrichtung 5 von der Verriegelungsstellung in die Lösestellung wird das durch die Magnetspule 11 symbolisch angedeutete Werkzeug 10 in die Nähe der Kupplungseinrichtung 1 gebracht und wirkt mit den magnetischen Federabschnitten 30 in solcher Weise zusammen, dass sich die Federabschnitte 30 entgegen ihrer eigenen Federkraft verformen und ein Herausziehen des Rohrstutzens 2 aus dem Kupplungsgehäuse 3 zulassen.

Auch kann im Rahmen desselben erfinderischen Gedankens eine Kupplungseinrichtung verwirklicht werden, die eine magnetisch verdrehbare Komponente aufweist. So könnte z.B. ein magnetisch betätigbarer Bajonettverschluss bereitgestellt werden, um den Rohrstutzen im Kupplungsgehäuse gegen Herausziehen zu sichern. Die Verriegelungseinrichtung gemäß dieser Erfindung muss nicht zwingend die einzige Sicherung der Kupplungseinrichtung sein. Zur weiteren Verbesserung der Sicherheit einer Kupplungsverbindung ist es durchaus empfohlen z.B. eine weitere z.B. mechanische Sicherung (secondary latch) zu verwenden.

## Patentansprüche

1. Kupplungseinrichtung (1) für Rohre (2) oder dergleichen mit einem Kupplungsgehäuse (3) mit einer Öffnung (4) zur Aufnahme eines Rohres (2) und einer Verriegelungseinrichtung (5), die überführbar ist zwischen:
- einer Lösestellung, in der das Rohr (2) gegenüber dem Kupplungsgehäuse (3) bewegbar ist und
- einer Verriegelungsstellung, in der das Rohr (2) im Kupplungsgehäuse (3) gegenüber Herausziehen sicherbar ist,
**dadurch gekennzeichnet, dass** die Verriegelungseinrichtung (5) zum Überführen zwischen Löse- und Verriegelungsstellung und/oder zwischen Verriegelungs- und Lösestellung magnetisch betätigbar ist.

2. Kupplungseinrichtung (1) nach Anspruch 1, **dadurch gekennzeichnet, dass** die Verriegelungseinrichtung (5) eine magnetisch verformbare Einrichtung aufweist.

3. Kupplungseinrichtung (1) nach Anspruch 1 oder Anspruch 2, **dadurch gekennzeichnet, dass** die Verriegelungseinrichtung (5) magnetisch bewegbare Einrichtung (6) aufweist.

4. Kupplungseinrichtung (1) nach einem der vorangehenden Ansprüche, **dadurch gekennzeichnet, dass** die Verriegelungseinrichtung (5) magnetisch verdrehbare Einrichtung (6) aufweist.

5. Kupplungseinrichtung (1) nach einem der vorangehenden Ansprüche, **dadurch gekennzeichnet, dass** die Verriegelungseinrichtung (5) eine magnetische Einrichtung (6) umfasst.

6. Kupplungseinrichtung (1) nach einem der vorangehenden Ansprüche, **dadurch gekennzeichnet, dass** die Verriegelungseinrichtung (5) sich in Lösestellung befindet, wenn ein magnetisches Feld auf sie wirkt.

7. Kupplungseinrichtung (1) nach einem der vorangehenden Ansprüche, **dadurch gekennzeichnet, dass** sich die Verriegelungseinrichtung (5) in Verriegelungsstellung befindet, wenn kein magnetisches Feld auf sie wirkt.

8. Kupplungseinrichtung (1) nach einem der vorangehenden Ansprüche, **dadurch gekennzeichnet, dass** die Verriegelungseinrichtung (5) berührungsfrei von der Verriegelungsstellung in die Lösestellung überführbar ist.

9. Kupplungseinrichtung (1) nach einem der vorangehenden Ansprüche, **dadurch gekennzeichnet, dass** die Verriegelungseinrichtung (5) zumindest einen Verriegelungsmechanismus (8) umfasst, der eine Bewegung des Rohres (2) in das Innere des Kupplungsgehäuses (3) in einer ersten Richtung zulässt und der die Bewegung des Rohres in einer zweiten, entgegengesetzten Richtung hemmt.

10. Kupplung zwischen einer Kupplungseinrichtung (1) nach zumindest einem der vorangehenden Ansprüche und einem Rohr (2).

11. Rohr mit einer Verriegelungseinrichtung (5) zum Verriegeln des Rohrs (2) mit einer Kupplungseinrichtung (1), wobei die Verriegelungseinrichtung (5) überführbar ist zwischen:
- einer Lösestellung, in der das Rohr (2) gegenüber der Kupplungseinrichtung (1) bewegbar ist und
- einer Verriegelungsstellung, in der das Rohr (2) in der Kupplungseinrichtung (1) gegenüber Herausziehen sicherbar ist,
**dadurch gekennzeichnet, dass** die Verriegelungseinrichtung (5) zum Überführen zwischen Löse- und Verriegelungsstellung und/oder zwischen Verriegelungs- und Lösestellung magnetisch betätigbar ist.

12. Rohr (2) nach Anspruch 11, **dadurch gekennzeichnet, dass** die Verriegelungseinrichtung (5) eine magnetisch verformbare Einrichtung aufweist.

13. Rohr (2) nach Anspruch 11 oder Anspruch 12, **dadurch gekennzeichnet, dass** die Verriegelungseinrichtung (5) magnetisch bewegbare Einrichtung (6) aufweist.

14. Rohr (2) nach einem der Ansprüche 11 bis 13, **dadurch gekennzeichnet, dass** die Verriegelungseinrichtung (5) magnetisch verdrehbare Einrichtung (6) aufweist.

15. Rohr (2) nach einem der Ansprüche 11 bis 14, **dadurch gekennzeichnet, dass** die Verriegelungseinrichtung (5) eine magnetische Einrichtung (6) umfasst.

16. Kupplung zwischen einem Rohr (2) nach einem der Ansprüche 11 bis 15 und einem Kupplungsgehäuse (3).

17. Werkzeug (10) für die Verriegelungseinrichtung (5) nach einem der vorangehenden Ansprüche, **dadurch gekennzeichnet, dass** das Werkzeug ein magnetisches Feld erzeugt, um die Verriegelungseinrichtung (5) zum Überführen von der Verriegelungsstellung in die Lösungsstellung und/oder von der Lösungsstellung in die Verriegelungsstellung magnetisch zu betätigen.

18. Bausatz bestehend aus einer Kupplung nach Anspruch 9 oder Anspruch 16 und einem Werkzeug (10) gemäß Anspruch 17.
